# DEMANDE DE BREVET EUROPEEN

(11) **EP 2 330 732 A1**
(43) Date de publication de la demande: **08.06.2011**
(21) Numéro de dépôt: 10192557.6
(22) Date de dépôt: 25.11.2010
(51) Int. Cl.: H02M 7/219, H02M 1/42, H02M 1/32

(54) **Circuit de pré-charge pour convertisseur AC/DC**

(30) Priorité: 03.12.2009 FR 0958616
(71) Demandeur: AEG Power Solutions B.V., 1161 AG Zwanenburg (NL)
(72) Inventeur: Balocco, Didier, 22300 Lannion (FR)
(74) Mandataire: David, Alain

(57) **Abrégé**

Dans un convertisseur AC/DC, il est prévu un circuit de pré-charge (16) pour un convertisseur survolteur sans pont (14), comportant une première diode D1 dont l'anode est reliée à une première borne d'entrée alternative (10A) du convertisseur AC/DC et la cathode est reliée à une première borne de sortie continue (12A) du convertisseur AC/DC, une seconde diode D2 dont l'anode est reliée à une seconde borne d'entrée alternative (10B) du convertisseur AC/DC et la cathode est reliée à la première borne de sortie continue du convertisseur AC/DC, un premier commutateur S1 dont une extrémité est reliée la première borne d'entrée alternative du convertisseur AC/DC et l'autre extrémité à une seconde borne de sortie continue (12B) du convertisseur AC/DC, et un second commutateur S2 dont une extrémité est reliée la seconde borne d'entrée alternative du convertisseur AC/DC et l'autre extrémité à la seconde borne de sortie continue du convertisseur AC/DC.

## Description

### Domaine de l'invention

La présente invention se rapporte au domaine des convertisseurs de puissance AC/DC et elle concerne plus particulièrement un circuit de protection pour la pré-charge de la sortie et son utilisation pour améliorer les interférences électromagnétiques et le rendement dans un convertisseur survolteur sans pont à correction de facteur de puissance (Bridgeless boost PFC converter).

### Art antérieur

Le recours aux convertisseurs AC/DC pour transformer une source de tension alternative, par exemple le secteur, en une tension continue stabilisée est bien connu et cela dans tout type d'industrie.

Parmi ces convertisseurs, une des configurations les plus intéressantes en matière de rendement relativement aux pertes par conduction est le convertisseur survolteur sans pont à correction de facteur de puissance. Toutefois, la suppression du classique pont de diodes donne à cette configuration une sensibilité particulière aux coupures et surcharges de courant ou de tension en provenance de la source de tension alternative.

Dans la demande internationale WO2009/058024, il a été proposé de disposer en parallèle d'un tel convertisseur un circuit de protection formé de quatre diodes reliées d'une part à cette source de tension alternative et d'autre part en sortie du convertisseur. Malheureusement, l'adjonction de ce circuit n'est pas sans inconvénient car durant certaines phases de fonctionnement, notamment lorsque le courant dans l'une des inductances de découpage du convertisseur devient discontinu, des tensions de mode commun très importantes apparaissent aux bornes des diodes créant des interférences électromagnétiques (EMI) non désirables.

### Objet et définition de l'invention

La présente invention se propose de pallier les inconvénients précités avec un circuit de pré-charge pour convertisseur AC/DC qui limite fortement les interférences électromagnétiques dans le convertisseur. Un but de l'invention est aussi d'éviter la saturation des inductances de découpage du convertisseur lorsque la sortie n'est pas chargée. Un autre but de l'invention est d'améliorer le rendement d'un tel convertisseur.

Ces buts sont atteints par un circuit de pré-charge pour un convertisseur survolteur sans pont comprenant :
- une première diode D1 dont l'anode est reliée à une première borne d'entrée alternative dudit convertisseur et la cathode est reliée à une première borne de sortie continue dudit convertisseur, et
- une seconde diode D2 dont l'anode est reliée à une seconde borne d'entrée alternative dudit convertisseur et la cathode est reliée à ladite première borne de sortie continue,
   **caractérisé en ce qu**'il comporte en outre :
- un premier commutateur S1 relié entre ladite première borne d'entrée alternative et une seconde borne de sortie continue dudit convertisseur, et
- un second commutateur S2 relié entre ladite seconde borne d'entrée alternative et ladite seconde borne de sortie continue.

Ainsi, avec cette configuration spécifique, la présence des commutateurs bidirectionnels permet de diminuer notablement les interférences électromagnétiques qui se produisent principalement pendant les phases où le courant dans l'une des inductances de découpage du convertisseur est discontinu.

Avantageusement, lesdits premier et second commutateurs sont des transistors MOSFET.

La présente invention concerne également un convertisseur AC/DC comprenant un convertisseur survolteur sans pont et le circuit de pré-charge précité.

### Brève description des dessins

Les caractéristiques et avantages de la présente invention ressortiront mieux de la description suivante, faite à titre indicatif et non limitatif, en regard des dessins annexés sur lesquels :
- la figure 1 illustre montre un premier exemple d'un convertisseur AC/DC comprenant un circuit de pré-charge selon l'invention,
- les figures 1A à 1C montre des variantes de réalisation du convertisseur AC/DC de la figure 1 en y ajoutant un circuit limitant le courant de pré-charge, et
- la figure 2 illustre différentes phases de commande des commutateurs du convertisseur de la figure 1 et de son circuit de pré-charge associé.

### Description détaillée d'un mode de réalisation préférentiel

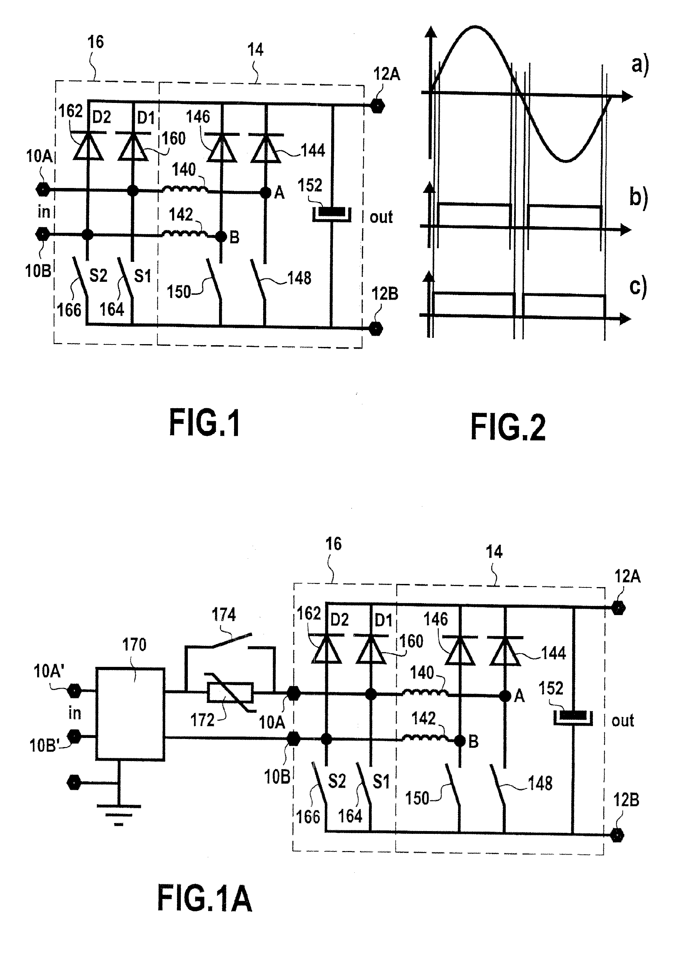

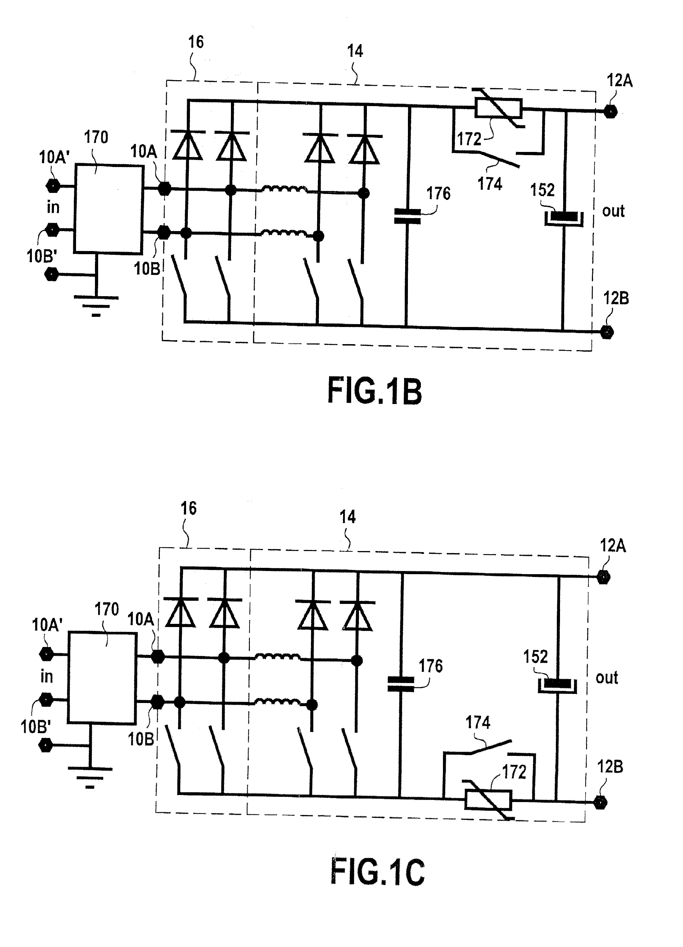

La figure 1 montre un premier exemple d'un convertisseur AC/DC 10 ayant deux bornes d'entrée alternatives 10A, 10B et deux bornes de sortie continue 12A, 12B et comportant un convertisseur survolteur sans pont à correction de facteur de puissance 14 et un circuit de pré-charge 16 conforme à l'invention.

Le convertisseur survolteur sans pont à correction de facteur de puissance comporte classiquement : une première inductance 140 dont une extrémité est reliée à la première borne d'entrée alternative 10A et dont l'autre extrémité est reliée à un premier noeud A, une seconde inductance 142 dont une extrémité est reliée à la seconde borne d'entrée alternative 10B et dont l'autre extrémité est reliée à un second noeud B, une première diode de redressement 144 dont l'anode est reliée au premier noeud A et la cathode est reliée à la première borne de sortie continue 12A, une seconde diode de redressement 146 dont l'anode est reliée au second noeud B et la cathode est également reliée à la première borne de sortie continue 12A, un premier commutateur de découpage 148 relié entre le premier noeud A et la seconde borne de sortie continue 12B, un second commutateur de découpage 150 relié entre le second noeud B et également la seconde borne de sortie continue 12B et un condensateur de stockage 152 connectée entre les deux bornes de sortie continue 12A, 12B.

Conformément à l'invention, le circuit de pré-charge comporte une première diode D1 de protection 160 dont l'anode est reliée à la première borne d'entrée alternative 10A et la cathode est reliée à la première borne de sortie continue 12A, une seconde diode D2 de protection 162 dont l'anode est reliée à la seconde borne d'entrée alternative 10B et la cathode est également reliée à la première borne de sortie continue 12A, un premier commutateur S1 de protection 164 relié entre la première borne d'entrée alternative 10A et la borne de continue 12B et un second commutateur S2 de protection 166 relié cette fois entre la seconde borne d'entrée alternative 10B et également la seconde borne de sortie continue 12B.

Dans un autre mode de réalisation illustré à la figure 1A et comprenant un circuit limitant le courant de pré-charge, les première et seconde bornes d'entrée alternatives 10A, 10B du convertisseur AC/DC ne sont pas reliées directement aux bornes de la source de tension alternative, le secteur 10A', 10B' par exemple, mais au travers à la fois d'un filtre EMI 170 et d'un circuit de limitation du courant d'appel formé d'une résistance 172, pouvant être variable, et sur laquelle est monté en parallèle un interrupteur commandé 174 dont la nature flottante rend toutefois sa commande difficile. Le filtre EMI est monté en parallèle directement sur les bornes de la source alternative 10A', 10B' alors que le circuit de limitation est monté en série en sortie du filtre EMI sur une des liaisons reliant ce filtre EMI à l'entrée du convertisseur AC/DC.

Les figures 1B et 1C montrent deux variantes du mode de réalisation de la figure 1A dans lesquelles le circuit de limitation 170, 172 est maintenant placé non plus en entrée du convertisseur AC/DC mais à sa sortie en série avec l'une ou l'autre des bornes de sortie continues 12A, 12B, un condensateur supplémentaire 176 étant alors nécessaire et disposé en aval en parallèle sur ces deux bornes de sortie, pour filtrer le courant de découpage.

Dans la structure de la figure 1B, le courant de pré-charge du condensateur 176 n'est pas contrôlé. Ce dernier doit donc être de faible valeur. Les conditions de fermeture et d'ouverture de l'interrupteur 174 sont plus faciles à connaitre mais sa commande, qui est toujours flottante, reste difficile. Toutefois, cette variante présente l'avantage de ne pas couper le point commun négatif 12B entre les deux condensateurs 176 et 152.

Dans la structure de la figure 1C, le courant de pré-charge du condensateur 176 n'est pas non plus contrôlé. Ce dernier doit donc aussi être de faible valeur. Toutefois, les conditions de fermeture et d'ouverture de l'interrupteur 174 sont plus faciles à connaitre et sa commande est maintenant facile, car il est relié au même potentiel que les autres commutateurs du convertisseur 148, 150, 164 et 166. Un inconvénient de cette autre variante est cependant de couper le point commun négatif entre les deux condensateurs 176 et 152, laquelle coupure peut avoir des impacts importants sur les perturbations électromagnétiques.

Le fonctionnement du convertisseur et du circuit de pré-charge selon l'invention (assurant le chemin de retour pour le courant) est maintenant illustré en regard de la figure 2 qui illustre différentes phases obtenues en régime permanent ou établi.

On pourra noter qu'en fonctionnement normal, le courant de retour, choisissant toujours le chemin ayant l'impédance la plus faible, circulera donc majoritairement au travers des commutateurs de protection (S1 ou S2) du circuit de pré-charge plutôt qu'au travers du couple d'inductances 140 ou 142 et des commutateurs de découpage 148 ou 150 du convertisseur.

Lors de l'alternance positive (positif sur la borne 10A et négatif sur la borne 10B) de la tension alternative (courbe a), le découpage se fait par le premier commutateur de découpage 148 (courbe b), la première inductance 140 et la première diode de redressement 144. L'état du second commutateur de découpage 150 n'intervient pas dans le découpage. Le retour du courant vers la borne 10B se fait majoritairement par le second commutateur de protection 166 qui est en permanence conducteur (courbe c). Une partie faible du courant de retour circule aussi par la seconde inductance 142 et le second commutateur de découpage 150. L'utilisation du second commutateur de protection 166 améliore le rendement en comparaison à l'utilisation d'une simple diode en S2. Pour améliorer encore le rendement, il est aussi possible que le second commutateur de découpage 150 soit conducteur en même temps que le second commutateur de protection 166. Par contre, pour éviter l'apparition de tension de mode commun, et donc la création d'interférences électromagnétiques, ce second commutateur de protection 166 doit être activé un temps avant la mise en oeuvre du découpage avec le premier commutateur de découpage 148. De même, le second commutateur de protection 166 est maintenu activé un temps après l'arrêt du découpage avec le premier commutateur de découpage 148.

Lors de l'alternance négative (négatif sur la borne 10A et positif sur la borne 10B) de la tension alternative (courbe a), le découpage se fait par le second commutateur de découpage 150 (courbe b), la seconde inductance 142 et la seconde diode de redressement 146. L'état du premier commutateur de découpage 148 n'intervient pas dans le découpage. Le retour du courant vers la borne 10A se fait majoritairement par le premier commutateur de protection 164 qui est en permanence conducteur (courbe c). Une partie faible du courant de retour circule aussi par la première inductance 140 et le premier commutateur de découpage 148. L'utilisation du premier commutateur de protection 164 améliore le rendement en comparaison à l'utilisation d'une simple diode en S1. Pour améliorer encore le rendement, il est aussi possible que le premier commutateur de découpage 148 soit conducteur en même temps que le premier commutateur de protection 164. Par contre, pour éviter l'apparition de tensions de mode commun, et donc la création d'interférences électromagnétiques, le premier commutateur de protection 164 doit être activé un temps avant la mise en oeuvre du découpage avec le second commutateur de découpage 150. De même, le premier commutateur de protection 164 est maintenu activé un temps après l'arrêt du découpage avec le second commutateur de découpage 150.

Par contre, lorsque la tension alternative (courbe a) est proche de zéro, les premier et second commutateurs de protection S1 et S2 sont ouverts (pour éviter la formation d'un court circuit). Comme pendant cette période, les premier et second commutateurs de découpage 148, 150 du convertisseur sont aussi arrêtés, il n'y a donc plus de commutations, et alors plus non plus de bruit provoqué par les interférences électromagnétiques. Ce fonctionnement n'a que peu d'impact sur le rendement du convertisseur et/ou le facteur de forme du courant d'entrée, car lorsque la tension est proche de zéro, le transfert d'énergie est très faible et participe peu aux performances globales du convertisseur.

Ainsi, le circuit de pré-charge selon l'invention présente une structure particulièrement simple avec en encombrement réduit qui le rend applicable à de multiples configurations de convertisseur AC/DC. En outre, l'adjonction en amont ou en aval du circuit limiteur de courant permet de fixer l'amplitude maximale du courant de pré-charge.

## Revendications

1. Convertisseur AC/DC comportant :
- un convertisseur survolteur sans pont (14), et
- un circuit de pré-charge (16) comprenant :
- une première diode D1 (160) dont l'anode est reliée à une première borne d'entrée alternative (10A) du convertisseur AC/DC et la cathode est reliée à une première borne de sortie continue (12A) du convertisseur AC/DC, et
- une seconde diode D2 (162) dont l'anode est reliée à une seconde borne d'entrée alternative (10B) du convertisseur AC/DC et la cathode est reliée à ladite première borne de sortie continue du convertisseur AC/DC,
**caractérisé en ce que** ledit circuit de pré-charge comporte en outre :
- un premier commutateur (164) dont une extrémité est reliée ladite première borne d'entrée alternative du convertisseur AC/DC et l'autre extrémité à une seconde borne de sortie continue (12B) du convertisseur AC/DC, et
- un second commutateur (166) dont une extrémité est reliée ladite seconde borne d'entrée alternative du convertisseur AC/DC et l'autre extrémité à ladite seconde borne de sortie continue du convertisseur AC/DC.

2. Convertisseur AC/DC selon la revendication 1, **caractérisé en ce que** lesdits premier et second commutateurs sont des transistors MOSFET.

3. Convertisseur AC/DC selon la revendication 1, **caractérisé en ce qu**'il comporte en outre un circuit de limitation du courant d'appel (172, 174) monté en série sur ladite borne d'entrée alternative ou ladite borne de sortie continue.

4. Circuit de pré-charge (16) pour un convertisseur survolteur sans pont (14) comprenant :
- une première diode D1 (160) dont l'anode est reliée à une première borne d'entrée alternative (10A) du convertisseur AC/DC et la cathode est reliée à une première borne de sortie continue (12A) du convertisseur AC/DC, et
- une seconde diode D2 (162) dont l'anode est reliée à une seconde borne d'entrée alternative (10B) du convertisseur AC/DC et la cathode est reliée à ladite première borne de sortie continue du convertisseur AC/DC,
**caractérisé en ce qu**'il comporte en outre :
- un premier commutateur (164) dont une extrémité est reliée ladite première borne d'entrée alternative du convertisseur AC/DC et l'autre extrémité à une seconde borne de sortie continue (12B) du convertisseur AC/DC, et
- un second commutateur (166) dont une extrémité est reliée ladite seconde borne d'entrée alternative du convertisseur AC/DC et l'autre extrémité à ladite seconde borne de sortie continue du convertisseur AC/DC.

5. Circuit de pré-charge selon la revendication 4, **caractérisé en ce que** lesdits premier et second commutateurs sont des transistors MOSFET.
